(19) Europäisches Patentamt
European Patent Office
Office européen des brevets

(11) EP 2 462 085 B1

(12) EUROPÄISCHE PATENTSCHRIFT

(45) Veröffentlichungstag und Bekanntmachung des Hinweises auf die Patenterteilung:
**09.09.2015 Patentblatt 2015/37**

(21) Anmeldenummer: **10743024.1**

(22) Anmeldetag: **28.07.2010**

(51) Int Cl.:
***C05G 3/08*** (2006.01) ***C05G 3/00*** (2006.01)
***C05G 5/00*** (2006.01) ***C05C 9/00*** (2006.01)
***C05C 11/00*** (2006.01)

(86) Internationale Anmeldenummer:
**PCT/EP2010/004630**

(87) Internationale Veröffentlichungsnummer:
**WO 2011/015305 (10.02.2011 Gazette 2011/06)**

(54) **ANTIBACKMITTEL FÜR HARNSTOFFBASIERTE DÜNGEMITTEL, DÜNGEMITTELFORMULIERUNGEN MIT DIESEM ANTIBACKMITTEL UND VERFAHREN ZU DEREN HERSTELLUNG**

ANTICAKING AGENT FOR UREA-BASED FERTILISER, FERTILISER FORMULATIONS COMPRISING SAID ANTICAKING AGENT, AND METHOD FOR PRODUCING SAME

AGENT ANTIAGGLOMÉRANT POUR ENGRAIS À BASE D’URÉE, FORMULATIONS D’ENGRAIS RENFERMANT CET AGENT ANTIAGGLOMÉRANT, ET PROCÉDÉ POUR LEUR PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **05.08.2009 DE 102009036229**

(43) Veröffentlichungstag der Anmeldung:
**13.06.2012 Patentblatt 2012/24**

(73) Patentinhaber: **SKW STICKSTOFFWERKE PIESTERITZ GmbH**
**06886 Lutherstadt Wittenberg (DE)**

(72) Erfinder:
- **REINHARDT, Petra**
  **06847 Dessau (DE)**
- **KRESSLER, Jörg**
  **06120 Halle (DE)**
- **NICLAS, Hans-Joachim**
  **12435 Berlin (DE)**
- **RADICS, Ute**
  **06901 Kemberg (DE)**
- **HUCKE, André**
  **06889 Wittenberg (DE)**

(74) Vertreter: **Schneider, Michael**
**Eversheds Deutschland LLP**
**Brienner Strasse 12**
**80333 München (DE)**

(56) Entgegenhaltungen:

| | |
|---|---|
| **EP-A1- 1 258 191** | **WO-A1-00/58317** |
| **WO-A1-95/22515** | **WO-A1-96/27288** |
| **WO-A1-2006/091076** | **DE-A1- 10 342 551** |
| **GB-A- 1 217 106** | **US-A- 3 388 990** |

- **DATABASE WPI Week 201049 Thomson Scientific, London, GB; AN 2010-C62638 XP002620185, & CN 101 654 387 A (BEIJING KEPUJIYE FINE CHEM SCI & TECHNOLOGY DEV CO LTD) 24. Februar 2010 (2010-02-24)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 462 085 B1

## Beschreibung

Die Erfindung betrifft ein Antibackmittel für harnstoffbasierte Düngemittel, Düngemittelformulierungen mit diesem Antibackmittel sowie ein Formulierungsverfahren zur oberflächigen Applikation des Antibackmittels.

## Stand der Technik

Granulierte feste Düngemittel müssen bis zur Ausbringung mehrere Monate lagerbar sein. Durch Ausbildung von Kristallbrücken zwischen den Granalien durch Löse- und Rekristallisationsprozesse in Gegenwart von Feuchtigkeit einerseits und durch den Lagerdruck des Düngemittelhaufwerkes andererseits kann es zum Verbacken des Düngemittels kommen. Ein solches Düngemittel ist nicht mehr ohne Weiteres umschlag- und ausbringbar.

Die Umhüllung eines Düngemittels mit einer Schicht eines Antibackmittels ist deshalb gängige Praxis. Die oberflächig aufgebrachte Schicht des Konditionierungsmittels schützt die Feststoffdüngerteilchen bei Transport und Lagerung in nicht klimatisierten Räumen vor Umwelteinflüssen und Verbacken und ist für die Erhaltung der Qualität der Feststoffdünger über mehrere Monate auch bei ungünstigen klimatischen Gegebenheiten zwingend erforderlich.

Die eingesetzten Konditionierungsmittel sollten bei vertretbaren Aufwandmengen toxikologisch unbedenklich und biologisch abbaubar sein. Außerdem müssen diese preisgünstig verfügbar und mit geringem Aufwand applizierbar sein. Neben der Antibackwirkung müssen die jeweiligen Konditionierungsmittel auch möglichst gleichmäßig und vollständig auf das Düngemittel aufziehen, um die gewünschte Wirkung zu erzielen.

Als Antibackmittel sind meist tensidische Stoffe im Einsatz, wie z. B. längerkettige Alkylamine und Alkylarylsulfonate (E. A. Bijpost, J. G. Korver: Proceedings of the International Fertilizer Society 584 (2006)). Die grenzflächenaktiven Verbindungen ordnen sich auf der polaren Granalienoberfläche an und wirken so einem Verbacken entgegen.

Zur besseren Ausnutzung der Nährstoffe werden im Fall harnstoffbasierter Düngemittel Nitrifikationsinhibitoren eingesetzt, die die Bildung des leicht aus dem Boden auswaschbaren Nitrates verzögern. Ein bewährter nitrifikationshemmender Wirkstoff ist das Dicyandiamid (vgl. DE 27 14 601, DE 29 22 436, DD 159 988, DE 35 43 920, DE 32 37 905, US 4,309,206, EP-A 19881, EP 0 908 430). Zur Gewährleistung einer sicheren nitrifikationsinhibierenden Wirkung sind allerdings vergleichsweise hohe Anteile an Dicyandiamid in den Harnstoff einzuarbeiten. In EP 0 908 430 werden beispielsweise 3 bis 10 Gew.-% Dicyandiamid bezogen auf das Gewicht der Harnstoffschmelze eingebracht.

Im Bemühen, die hohen und damit kostenaufwändigen Einsatzmengen an Dicyandiamid herabzusetzen, wurden Kombinationen des Dicyandiamids mit weiteren die Nitrifikation hemmenden Verbindungen vorgeschlagen. In EP 0 746 537 wird unter anderem eine synergistische nitrifikationshemmende Wirkung der beiden für sich allein nur mäßig wirksamen Verbindungen Dicyandiamid und 1,2,4-Triazol festgestellt. Im Gewichtsverhältnis 10 : 1 vermischt, zeigt die Wirkstoffkombination Dicyandiamid/1,2,4-Triazol bei einem Fünftel der Einsatzmenge des Dicyandiamids allein bereits die gleiche nitrifikationsinhibierende Wirkung. Das erlaubt eine niedrigere Dosierung des Wirkstoffgemisches zum Harnstoff, was aus Kostengründen wünschenswert ist.

Da das Triazol flüchtig ist, kommt es bei Zusatz des Wirkstoffes zur Harnstoffschmelze zu Sublimationsverlusten im Granulationsprozess. In DE 103 42 551 ist deshalb die Applikation des Triazols auf die Granalienoberfläche mit Hilfe einer wässrigen Polyvinylalkohollösung beschrieben, wobei nach Trocknung der Granalien das Triazol in der Polymerschicht gebunden bleibt.

Polyvinylalkohol selbst ist allerdings kein gutes Antibackmittel. Im Gegenteil, Polyvinylalkohol besitzt adhäsive Eigenschaften und wird als Bestandteil von Klebstoffen verwendet (vgl. z. B. C.A. Finch in Polyvinyl Alcohol, John Wiley and Sons, New York (1992) sowie US 3,668,166). Durch Zugabe von geeigneten Tensiden kann jedoch eine gute Antibackwirkung erreicht werden. So wird in US 3,388,990 neben Polyvinylalkohol, die Verwendung verschiedener Polymere in Kombination mit anionischen Tensiden als Antibackmittel vorgeschlagen. Die anionischen Tenside sind dabei ausgewählt aus der Gruppe der Alkylsulfate, Alkylarylsulfonate sowie der Fettsäuresalze. Ähnliche Ansprüche offenbart US 5,472,476, nur dass hier Alkylphosphorsäurederivate als Tensid eingesetzt werden.

Die in beiden Patenten aufgeführten Beispiele zeigen, dass die Zugabe eines Tensids zum Polyvinylalkohol nicht automatisch zu einer guten Antibackwirkung führt. Vielmehr muss das Tensid auf das jeweilige Düngemittel und dessen Produktionsprozess abgestimmt werden. So ist bei der Applikation der wässrigen Polyvinylalkohollösung eine anschließende Trocknung des Düngemittels notwendig, um die gewünschten Lagereigenschaften zu erreichen. Gerade bei hohen Temperaturen in Kombination mit hoher Luftfeuchte lässt sich aber die Restfeuchte des Düngemittels durch Trocknen nicht weit genug absenken, was dann trotz Antibackmittel zum Verbacken des Produktes führen kann.

Darüber hinaus muss das Tensid bereits im Produktionsprozess beim Besprühen und Trocknen der Granalien eine ausreichende Antibackwirkung auch bei erhöhter Temperatur aufweisen. Ansonsten kommt es zur Ablagerungen und Verbackungen an Anlagenteilen, die manuell entfernt werden müssen, was zur Unterbrechung der Produktion führen kann.

Auch der Molmassenbereich und der Hydrolysegrad des Polyvinylalkohols und damit die Viskosität der wässrigen Lösung beeinflusst das Lagerverhalten. Im Fall einer zu hohen Viskosität des Polyvinylalkohols ist ein Aufziehen

der Polyvinylalkohol/Tensidlösung auf die Granalien nicht möglich oder erfolgt nur ungenügend, was eine Verschlechterung der Antibackwirkung zur Folge hat.

Es ist also nicht trivial, eine geeignete Kombination aus Polyvinylalkohol und Tensid zu finden, die die gewünschten Effekte zeigt. Entsprechend schwieriger ist es, eine Kombination zu finden, wenn zusätzlich noch ein Wirkstoff, wie z. B. der Nitrifikationsinhibitor Thiazol in der Lösung anwesend ist. In diesem Fall darf weder die Anwesenheit des Wirkstoffes die Antibackwirkung vermindern, noch darf die Inhibitionswirkung und Stabilität des Wirkstoffes durch das Formulierungsmittel negativ beeinflusst werden.

US 3 388 990 A offenbart ein Verfahren zum Verhindern des Zusammenbackens einer Substanz unter Verwendung einer wässrigen Lösung eines synthetischen Hochpolymers und eines oberflächenaktiven Mittels. WO 2006/091076 A1 betrifft ein Verfahren zur Herstellung eines rieselfähigen Granulats eines Pflanzenhilfsstoffs unter Verwendung eines Polyalkylenamins oder Alkylalkohols. DE 103 42 551 A1 beschreibt ein Verfahren zur Herstellung von Dicyandiamid und 1,2,4-Triazol als Nitrifikationshemmer enthaltenden Düngemittelgranulaten auf Harnstoffbasis. GB 1 217 106 A offenbart nicht zusammenbackende Harnstoffzusammensetzungen unter Verwendung einer wässrigen Lösung eines Polyvinylalkohols mit hohem Molekulargewicht. EP 1 258 191 A1 betrifft die Verhinderung des Auslaugens eines landwirtschaftlichen Wirkstoffs durch Verwendung eines Tannins. WO 96/27288 A1 beschreibt agrochemische Zusammensetzungen, die eingekapseltes Bicarbonat enthalten.

## Gegenstand der Erfindung

Der vorliegenden Erfindung lag daher die Aufgabe zugrunde, ein aus Polyvinylalkohol und Tensid bestehendes Formulierungsmittel für harnstoffbasierte Prills oder Granalien zu finden, das die genannten Nachteile des Standes der Technik nicht aufweist. Das Formulierungsmittel sollte eine sehr gute Antibackwirkung gewährleisten und auch zur Applikation von Nitrifikationsinhibitoren geeignet sein.

## Beschreibung der Erfindung

Diese Aufgabe wurde erfindungsgemäß dadurch gelöst, dass zur Formulierung des harnstoffbasierten Düngemittels eine wie in Anspruch 1 definierte wässrige Lösung eines Polyvinylalkohols und eines mit Fettsäure veresterten Polyoxyethylensorbitans als Tensid eingesetzt wurde.

Durch die Kombination des genannten Polyvinylalkohols mit dem genannten Tensid konnte eine unerwartet gute Antibackwirkung erreicht werden, die über den bisherigen Stand der Technik hinausgeht.

Neben der ausgezeichneten Antibackwirkung bei der Lagerung wird auch eine unerwartet gute Wirkung der erfindungsgemäßen Antibackzusammensetzung bei der Formulierung des harnstoffbasierten Düngemittels beobachtet. So sind die bisher aufgrund erhöhter Feuchte und Temperatur im Produktionsprozess auftretenden Verbackungen und Ablagerungen auf Anlagenteilen weitgehend minimiert.

Besonders überraschend war die Feststellung, dass die Antibackwirkung bei der Lagerung des Düngemittels in unklimatisierten Lagerhallen auch bei einem erhöhten Restfeuchtegehalt des Düngemittels erhalten bleibt. Bisher war es bei ungünstigen klimatischen Bedingungen (hohe Luftfeuchte) nicht immer möglich, nach der Formulierung den Wassergehalt des Düngemittels durch Trocknen genügend weit abzusenken.

Aufgrund der guten Wasserlöslichkeit des Nitrifikationsinhibitors 1,2,4-Triazol ist die wässrige Lösung der erfindungsgemäßen Antibackzusammensetzung gut geeignet, das Triazol zusammen mit dem Antibackmittel auf die Oberfläche der Düngemittelgranalien zu applizieren. Dabei wurde überraschend festgestellt, dass selbst hohe Triazolgehalte von 30 % und mehr die Antibackwirkung nicht verringern. Im Gegenteil, das Triazol in der wässrigen Lösung der erfindungsgemäßen Antibackzusammensetzung wirkt viskositätssenkend, was zum besseren Aufziehen der Antibackzusammensetzung auf die Granalien beiträgt. Bei Anwesenheit von 1,2,4-Triazol in der Lösung können also auch höherviskose Polyvinylalkohole eingesetzt werden.

Ein weiterer positiver Effekt von 1,2,4-Triazol ist dessen fungizide Wirkung im Polyvinylalkohol. Polyvinylalkohollösungen neigen bei der Lagerung zum Befall mit Schimmelpilzen. Das Triazol in der Polyvinylalkohollösung kann diesen Befall wirksam verhindern.

In der erfindungsgemäßen Antibackzusammensetzung werden Polyvinylalkohole mit einer Molmasse zwischen 10.000 und 30.000 und einem Hydrolysegrad von 80 bis 100 % eingesetzt. Die Antibackwirkung der Kombination Polyvinylalkohol/Tensid nimmt mit zunehmendem Hydrolysegrad des Polyvinylalkohols zu. Deshalb sind als erfindungsgemäße Polyvinylalkohole solche mit einem Hydrolysegrad von über 90 % besonders bevorzugt.

Als Tensid wird in der erfindungsgemäßen Antibackzusammensetzung ein Ester zwischen einer Fettsäure und Polyoxyethylensorbitan verwendet, wobei die Fettsäuren Laurin-, Palmitin-, Stearin- und Ölsäure umfassen.

Die Konzentration des Polyvinylalkohols in der wässrigen Lösung der erfindungsgemäßen Antibackzusammensetzung liegt zwischen 5 und 30 Masseprozent und die des Tensids zwischen 0,1 und 3 Masseprozent.

In der wässrigen Lösung der erfindungsgemäßen Antibackzusammensetzung kann noch mindestens ein Nitrifikationsinhibitor in einer Konzentration zwischen 10 und 50 Masseprozent enthalten sein, wobei der Nitrifikationsinhibitor unter einer oder mehreren der folgenden Verbindungen ausgewählt ist:

a) 1H-1,2,4-Triazole, oder deren Salze oder Komplexverbindungen
b) Pyrazol-Derivate der allgemeinen Formel (I), oder Salze oder Komplexverbindungen davon,

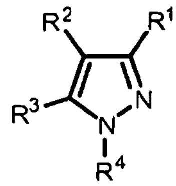

(I)

in der
$R^1$, $R^2$, $R^3$ unabhängig voneinander Wasserstoff, Halogen, $C_1$-$C_8$-Alkyl, oder $C_3$-$C_8$-Cycloalkyl und $R^4$ = Wasserstoff, $C_1$-$C_8$-Alkyl, $CH_2NHCOR^5$, $CH_2OC(O)R^5$, $CH_2OR^5$ mit $R^5$ = Wasserstoff, $C_1$-$C_8$-Alkyl, $C_6$-$C_{10}$-Aryl bedeuten.

Die Erfindung betrifft außerdem Düngemittelzusammensetzungen bestehend aus einem harnstoffbasierten Düngemittel und der erfindungsgemäßen Antibackzusammensetzung und Verfahren zur Herstellung dieser Düngemittelzusammensetzungen.

Das Herstellungsverfahren ist dadurch gekennzeichnet, dass Prills oder Granalien des harnstoffbasierten Düngemittels in Mischeinheiten, Wirbelschichtapparaturen oder auf Förderbändern mit der wässrigen Lösung der erfindungsgemäßen Antibackzusammensetzung besprüht und anschließend bei 30-50 °C im Trockner getrocknet werden. Die Temperatur der Prills oder Granalien des harnstoffbasierten Düngemittels liegt dabei zwischen 40 und 50 °C. Die wässrige Lösung der erfindungsgemäßen Antibackzusammensetzung wird in einer Menge von 0,05 bis 1 % bezogen auf das Gewicht des harnstoffbasierten Düngemittels appliziert. Anschließend kann eine zweiten Schicht eines paraffinbasierten Hydrophobierungsmittels in einer Menge von 0,05-1 % bezogen auf das Gewicht des harnstoffbasierten Düngemittels aufgebracht werden.

Zu den harnstoffbasierten Düngemitteln im Sinne der Erfindung zählt zunächst der Harnstoff selbst, der geprillt, granuliert oder in irgendeiner anderen Form kompaktiert vorliegen kann. Neben Harnstoff können aber auch weitere Stickstoffdünger wie Ammoniumsulfat oder Ammoniumnitrat im harnstoffbasierten Düngemittel enthalten sein. Daneben zusätzliche Nährstoffe wie Phosphor oder Kalium sowie auch Wirkstoffe wie Nitrifikationsinhibitoren (z. B. Dicyandiamid), Ureaseinhibitoren (Phosphorsäuretriamide der allgemeinen Struktur $R^1R^2N$-$PX(NH_2)_2$ mit X = O oder S und $R^1$ und $R^2$ unabhängig voneinander Wasserstoff sowie jeweils substituiertes oder unsubstituiertes Alkyl oder Aryl oder Pflanzenschutzmittel.

Die vorliegende Erfindung soll nun anhand der folgenden Beispiele ohne Beschränkung und somit lediglich zur Veranschaulichung erläutert werden.

**Beispiele**

In den folgenden Beispielen bedeuten:

PSL = Polyoxyethylensorbitanmonolaurat
PSO = Polyoxyethylensorbitanmonooleat
FPE = Fettalkoholpolyoxyethylenether
PEP = Poly(ethylenglycol-co-propylenoxid)
NPE = Nonylphenolpolyoxyethylenether

*Beispiel 1: Viskositätssenkende Wirkung von Triazol*

Zur Bestimmung der viskositätssenkenden Wirkung von 1,2,4-Triazol wurde von wässrigen Antibacklösungen mit 12 % Polyvinylalkohol und 1 % Tensid die dynamische Viskosität bei Abwesenheit von Triazol sowie bei Zugabe von 32 % Triazol gemessen.

| *Hydrolysegrad Polyvinylalkohol* | *Tensid* | *Viskosität ohne 1,2,4-Triazol* | *Viskosität mit 32 % 1,2,4-Triazol* |
|---|---|---|---|
| 88 | PSO | 1700 mPa·s | 593 mPa·s |

(fortgesetzt)

| *Hydrolysegrad Polyvinylalkohol* | *Tensid* | *Viskosität ohne 1,2,4-Triazol* | *Viskosität mit 32 % 1,2,4-Triazol* |
|---|---|---|---|
| 96 | PSO | 129 mPa·s | 57 mPa·s |
| 86 | FPE | 401 mPa·s | 172 mPa·s |

*Beispiel 2: Modelltest Haft/Klebewirkung*

Zur Bestimmung der Haft- bzw. Klebewirkung wurden in einem Modelltest 0,4 g einer wässrigen 12%igen Polyvinylalkohollösung mit 0,7 % Tensid und 32 % 1,2,4-Triazol zwischen zwei Metallplatten aufgetragen und getrocknet. Anschließend wurde mechanisch der Kraftaufwand zum Trennen der Platten in einem Zugtest bestimmt.

| *Tensid* | *Bewertung* | *Erforderliche Kraft zum Trennen der Platten* |
|---|---|---|
| PSO | Selbständig abgelöst | 4 N |
| FPE | Löst sich schwer ab | 12 N |

*Beispiel 3: Antibacktest*

Pro Messreihe wurden je 5 Proben á 50 g granulierter Harnstoff mit einer wässrigen Lösung aus 12 % Polyvinylalkohol, 1 % Tensid und 32 % 1,2,4-Triazol konditioniert und getrocknet. Anschließend werden die Proben bei Umgebungstemperatur und -feuchte in zylindrischen Behältern (Höhe 5 cm; Durchmesser 5 cm) mit einem Stempel pneumatisch mit 6 bar über 21 Tage belastet. Die Festigkeit gebildeter Prüfkörper wird mit einem Materialprüfgerät gemessen.

| *Tensid* | *Durchschnittliche Verbackung (je 5 Proben, Doppelbestimmung)* |
|---|---|
| PSL | 72 N |
| PSO | 73 N |

*Zum Vergleich:*

| | |
|---|---|
| PEP | 93 N |
| NPE | 93 N |
| FPE | 90 N |

*Beispiel 4: Antibacktest (Doppelpartikelsystem), Einfluss des Tensids auf Antibackwirkung*

Zum Test der Wirkung des Antibackmittels wurden zwei mit dem jeweiligen Antibackmittel (wässrige Lösung aus 11 % Polyvinylalkohol, 0,7 % Tensid und 33 % 1,2,4-Triazol) gecoatete Harnstoffgranalien übereinander in eine enge Glasröhre gegeben und so mit einem Gewicht von 50 g belastet, dass ein Luftaustausch zwischen Granalien und der Umgebung möglich ist. Die Glasröhren mit den belasteten Granalien wurden 3 Tage bei 25 °C und 85 % relativer Luftfeuchte im Klimaschrank gelagert. Anschließend wurden die Harnstoffgranalien 2 Tage bei 25 °C und 30 % Luftfeuchte getrocknet. Zur Bestimmung der Stärke der Verbackung wurde die obere Granalie in einer Klemme eingespannt und an der unteren Granalie mittels einer Klemme eine Plastikschale an Fäden befestigt. In die Plastikschale wurden so lange Bleikugeln gegeben, bis die verbackenen Granalien auseinander rissen. Dieser Versuch wurde neunmal wiederholt und ein Mittelwert des erforderlichen Gewichtes bestimmt.

| *Tensid* | *Gewicht [g]* |
|---|---|
| PSL | 34 |
| PSO | 25 |

Zum Vergleich:

| | |
|---|---|
| FPE | 148 |
| PEP | 116 |
| NPE | 69 |

*Beispiel 5: Antibacktest (Doppelpartikelsystem); Einfluss des Hydrolysegrades des Polyvinylalkohols auf Antibackwirkung*

Es wurde die Antibackwirkung wässriger Lösungen aus 11 % Polyvinylalkohol, 0,7 % PSO und 33 % 1,2,4-Triazol untersucht. Die Versuchsdurchführung erfolgte analog Beispiel 4, mit dem Unterschied, dass vor der Trocknung die belasteten Granalien 3 Tage bei 40 °C und 75 % relativer Luftfeuchte im Klimaschrank lagerten.

| *Hydrolysegrad Polyvinylalkohol* | *Gewicht [g]* |
|---|---|
| 80% | 155 |
| 83% | 138 |
| 87% | 122 |
| 95% | 118 |
| 96% | 114 |
| 97% | 71 |
| 98% | 67 |
| 99% | 55 |

*Beispiel 6 : Antibacktest (Multipartikelsystem)*

Zum Test der Wirkung des Antibackmittels wurden 4 g mit dem jeweiligen Antibackmittel (wässrige Lösung aus 11 % Polyvinylalkohol, 0,7 % Tensid und 33 % 1,2,4-Triazol) gecoatete Harnstoffgranalien in eine Glasröhre gegeben und so mit einem Gewicht von 1 kg belastet, dass ein Luftaustausch zwischen Granalien und der Umgebung möglich ist. Die Glasröhren mit den belasteten Granalien wurden 3 Tage bei 25 °C und 85 % relativer Luftfeuchte im Klimaschrank gelagert. Anschließend wurden die Harnstoffgranalien 2 Tage bei 25 °C und 30 % Luftfeuchte getrocknet. Zur Bestimmung der Stärke der Verbackung wurde der so erhaltene verbackene Prüfkörper aus 1 m Höhe auf eine Metallplatte frei fallen gelassen. Die Antibackrate wurde nach folgender Formel bestimmt:

$$ABR = (a-b) / a \times 100\%$$

ABR = Antibackrate [%]
*a* = Gewicht Prüfkörpers vor dem Fall [g]
*b* = Gewicht der noch verbackenen Granalien nach dem Fall [g]

Eine Antibackrate von 100 % bedeutet also einen vollständigen Zerfall des verbackenen Prüfkörpers. Die Versuche wurden für jedes Tensid fünfmal wiederholt.

| *Tensid* | *Antibackrate* | | | | | |
|---|---|---|---|---|---|---|
| | *Versuch 1* | *Versuch 2* | *Versuch 3* | *Versuch 4* | *Versuch 5* | *Mittelwert* |
| PSL | 100 % | 100 % | 100 % | 100 % | 100 % | 100 % |
| PSO | 100 % | 100 % | 100 % | 100 % | 100 % | 100 % |

Zum Vergleich:

| | | | | | | |
|---|---|---|---|---|---|---|
| FPE | 55 % | 69 % | 100 % | 100 % | 71 % | 79 % |
| PEP | 100 % | 69 % | 86 % | 70 % | 75% | 80% |

*Beispiel 7: Lagerung zweier Versuchshaufwerke aus granuliertem Harnstoff in einer unklimatisierten Lagerhalle (Praxistest)*

Die Granalien wurden mit 0,3 % einer wässrigen Lösung enthaltend 12 % Polyvinylalkohol, 1 % Tensid und 32 % 1,2,4-Triazol besprüht und getrocknet.

In Abhängigkeit von der Lagerzeit des Haufwerkes wurde mit einer Prüfeinrichtung das Gewicht bestimmt, welches erforderlich ist, damit eine Nadel 15 cm in das Haufwerk eindringt. Parallel dazu wurde die Eindringtiefe eines Probestechers bestimmt, die mit normalem Kraftaufwand zu erreichen ist.

| *Haufwerk 1, Tensid = PSO* | | | *Vergleichshaufwerk 2, Tensid = FPE* | | |
|---|---|---|---|---|---|
| *Lagerzeit [Wochen]* | *Nadeltest*)* | *Eindringtiefe Probestecher* | *Lagerzeit [Wochen]* | *Nadeltest*)* | *Eindringtiefe Probestecher* |
| 22 | 1 kg | 30 cm | 22 | 2 kg | 30 cm |
| 30 | 1 kg | 30 cm | 29 | 2 kg | 20 cm |
| 40 | 1 kg | 30 cm | 32 | 2 kg | 10 cm |
| *) Gewicht für 15 cm Eindringtiefe | | | | | |

## Patentansprüche

1. Wässrige Lösung einer Antibackzusammensetzung für harnstoffbasierte Düngemittel enthaltend einen Polyvinylalkohol und eine Fettsäure verestert mit Polyoxyethylensorbitan als Tensid, wobei die Fettsäuren Laurin-, Palmitin-, Stearin- und Ölsäure umfassen, und wobei der Polyvinylalkohol eine Molmasse zwischen 10.000 und 30.000 g/mol sowie einen Hydrolysegrad von 80-100 % aufweist.

2. Wässrige Lösung einer Antibackzusammensetzung nach Anspruch 1, wobei die Konzentration des Polyvinylalkohols zwischen 5 und 30 Masseprozent und die des Tensids zwischen 0,1 und 3 Masseprozent liegt.

3. Wässrige Lösung einer Antibackzusammensetzung nach den Ansprüchen 1 bis 2, wobei zusätzlich noch mindestens ein Nitrifikationsinhibitor in einer Konzentration zwischen 10 und 50 Masseprozent enthalten sein kann.

4. Wässrige Lösung einer Antibackzusammensetzung nach Anspruch 3, wobei der Nitrifikationsinhibitor unter einer oder mehreren der folgenden Verbindungen ausgewählt ist:

   a) 1 H-1,2,4-Triazole, oder deren Salze oder Komplexverbindungen
   b) Pyrazol-Derivate der allgemeinen Formel (I), oder Salze oder Komplexverbindungen davon,

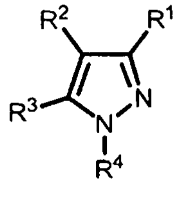 (I)

   in der
   $R^1$, $R^2$, $R^3$ unabhängig voneinander Wasserstoff, Halogen, $C_1$-$C_8$-Alkyl, oder $C_3$-$C_8$-Cycloalkyl und $R^4$ = Was-

serstoff, $C_1$-$C_8$-Alkyl, $CH_2NHCOR^5$, $CH_2OC(O)R^5$, $CH_2OR^5$ mit $R^5$ = Wasserstoff, $C_1$-$C_8$-Alkyl, $C_6$-$C_{10}$-Aryl bedeuten.

**5.** Verfahren zur Formulierung harnstoffbasierter Düngemittel mit einer Antibackzusammensetzung nach den Ansprüchen 1 bis 4, **dadurch gekennzeichnet, dass** Prills oder Granalien des harnstoffbasierten Düngemittels in Mischeinheiten, Wirbelschichtapparaturen oder auf Förderbändern mit der wässrigen Lösung der Antibackzusammensetzung nach den Ansprüchen 1 bis 4 besprüht und anschließend bei 30-50 °C im Trockner getrocknet werden.

**6.** Verfahren nach Anspruch 5, **dadurch gekennzeichnet, dass** die Temperatur der Prills oder Granalien des harnstoffbasierten Düngemittels zwischen 40 und 50 °C liegt und die wässrige Lösung der Antibackzusammensetzung nach den Ansprüchen 1 bis 4 in einer Menge von 0,05 bis 1 % bezogen auf das Gewicht des harnstoffbasierten Düngemittels appliziert wird.

**7.** Verfahren nach den Ansprüchen 5 und 6, **dadurch gekennzeichnet, dass** eine zweite Schicht eines paraffinbasierten Hydrophobierungsmittels in einer Menge von 0,05-1 % bezogen auf das Gewicht des harnstoffbasierten Düngemittels, aufgebracht wird.

**8.** Düngemittelzusammensetzung bestehend aus einem harnstoffbasierten Düngemittel und einer Antibackzusammensetzung nach den Ansprüchen 1 bis 4.

**9.** Düngemittelzusammensetzung nach Anspruch 8, **dadurch gekennzeichnet, dass** in das harnstoffbasierte Düngemittel DCD in einer Konzentration von 1-10 % eingranuliert ist.

**10.** Düngemittelzusammensetzung nach den Ansprüchen 8 oder 9, **dadurch gekennzeichnet, dass** auf die Oberfläche des harnstoffbasierten Düngemittels ein Ureaseinhibitor der allgemeinen Struktur $R^1R^2N$-$PX(NH_2)_2$ mit X = O oder S und $R^1$ und $R^2$ unabhängig voneinander Wasserstoff, sowie jeweils substituiertes oder unsubstituiertes Alkyl oder Aryl, mit einer Konzentration von 0,01-1 % aufgebracht ist.

## Claims

**1.** Aqueous solution of an anti-caking composition for urea-based fertilizers containing a polyvinyl alcohol and a fatty acid esterified with polyoxyethylene sorbitan as surface-active agent, wherein the fatty acids include lauric, palmitic, stearic and oleic acid and wherein the polyvinyl alcohol has a molar mass between 10,000 and 30,000 g/mol and a degree of hydrolysis between 80 and 100%.

**2.** Aqueous solution of an anti-caking composition according to claim 1, wherein the concentration of the polyvinyl alcohol is between 5 and 30 mass percent and of the surface-active agent between 0.1 and 3 mass percent.

**3.** Aqueous solution of an anti-caking composition according to claims 1 to 2, wherein additionally at least one nitrification inhibitor at a concentration between 10 and 50 mass percent can be present.

**4.** Aqueous solution of an anti-caking composition according to claim 3, wherein the nitrification inhibitor is selected from one or several of the following compounds:

a) 1 H-1,2,4-triazoles, or salts or complex compounds thereof
b) pyrazole derivatives of the general formula (I), or salts or complex compounds thereof,

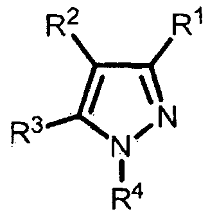

(I)

in which

$R^1$, $R^2$, $R^3$ independently of each other mean hydrogen, halogen, $C_1$-$C_8$-alkyl, or $C_3$-$C_8$-cycloalkyl and $R^4$ = hydrogen, $C_1$-$C_8$-alcyl, $CH_2NHCOR^5$, $CH_2OC(O)R^5$, $CH_2OR^5$ with $R^5$ = hydrogen, $C_1$-$C_8$-alkyl, $C_6$-$C_{10}$-aryl.

**5.** Method for the formulation of urea-based fertilizers with an anti-caking composition according to claims 1 to 4, **characterized in that** the prills or granules of the urea-based fertilizer are sprayed with the aqueous solution of the anti-caking composition according to claims 1 to 4 in mixing units, fluidized bed apparatus or on conveyor belts and subsequently dried at 30 to 50 °C in the dryer.

**6.** Method according to claim 5, **characterized in that** the temperature of the prills or granules of the urea-based fertilizer is between 40 and 50 °C and the aqueous solution of the anti-caking composition according to claims 1 to 4 is applied in a quantity of 0.05 to 1% in relation to the weight of the urea-based fertilizer.

**7.** Method according to claims 5 and 6, **characterized in that** a second layer of a paraffin-based water repellent in a quantity of 0.05 to 1% in relation to the weight of the urea-based fertilizer is applied.

**8.** Fertilizer composition consisting of a urea-based fertilizer and an anti-caking composition according to claims 1 to 4.

**9.** Fertilizer composition according to claim 8, **characterized in that** DCD is granulated in the urea-based fertilizer in a concentration of 1 to 10%.

**10.** Fertilizer composition according to claims 8 or 9, **characterized in that** a urease inhibitor of the general structure $R^1R^2N$-$PX(NH_2)_2$ with X = O or S and $R^1$ and $R^2$ independently of each other hydrogen as well as substituted or unsubstituted alkyl or aryl at a concentration of 0.01 to 1% in each case is applied on the surface of the urea-based fertilizer.

## Revendications

**1.** Solution aqueuse d'une composition antiback pour des substances fertilisantes à base d'urée contenant un alcool polyvinylique et un acide gras estérifié avec du polyoxyéthylensorbitane comme agent de surface, où les acides gras comprennent de l'acide laurique, de l'acide palmitique, de l'acide stéarique et de l'acide oléique, et où l'acool polyvinylique présente une masse moléculaire comprise entre 10 000 et 30 000 g/mol ainsi qu'un degré d'hydrolise de 80 à 100 pour cent.

**2.** Solution aqueuse d'une composition antiback selon la revendication 1, où la concentration de l'alcool polyvinylique est comprise entre 5 et 30 pour cent de la masse et l'agent de surface entre 0,1 et 3 pour cent de la masse.

**3.** Solution aqueuse d'une composition antiback selon les revendications 1 à 2, pouvant en outre contenir un inhibiteur de nitrification dans une concentration comprise entre 10 et 50 pour cent de la masse.

**4.** Solution aqueuse d'une composition antiback selon la revendication 3, où l'inhibiteur de nitrification est choisi parmi une ou plusieurs des liaisons suivantes :

a) 1H-1,2,4-Triazole, leurs sels ou liaisons complexes

b) Dérivés de pyrazole de la formule générale (I), ou leurs sels ou liaisons complexes,

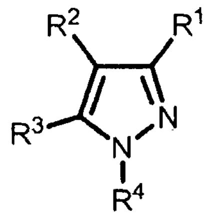

(I)

où

Hydrogène $R^1$, $R^2$, $R^3$ indépendant l'un de l'autre, halogène, alkyle $C_1$-$C_8$, ou cycloalkyle $C_3$-$C_8$ et $R^4$ = hydrogène, alkyle $C_1$-$C_8$, $CH_2NHCOR^5$, $CH_2OC(O)R^5$, $CH_2OR^5$ avec $R^5$ = hydrogène, alkyle $C_1$-$C_8$, aryle $C_6$-$C_{10}$.

**5.** Procédé de formulation de substances fertilisantes à base d'urée avec une composition antiback selon les revendications 1 à 4, **caractérisé par le fait que** les granulés ou les grenailles de la substance fertilisante à base d'urée sont aspergés dans des unités de mélange, des appareils de fluidisation ou sur des convoyeurs à courroie avec la solution aqueuse de la composition antiback selon les revendications 1 à 4 puis séchés dans un séchoir entre 30 et 50 °C.

**6.** Procédé selon la revendication 5, **caractérisé par le fait que** la température des granulés ou des grenailles de la substance fertilisante à base d'urée est comprise entre 40 et 50 °C et que la solution aqueuse de la composition antiback est appliquée selon les revendications 1 à 4 selon une concentration allant de 0,05 à 1 % en fonction du poids de la substance fertilisante à base d'urée.

**7.** Procédé selon les revendications 5 et 6, **caractérisé par le fait qu'**une deuxième couche de substance d'imperméabilisation à base de paraffine est appliquée selon une concentration de 0,05 à 1 % en fonction du poids de la substance fertilisante à base d'urée.

**8.** Composition de substance fertilisante se composant d'une substance fertilisante à base d'urée et d'une composition antiback conformément aux revendications 1 à 4.

**9.** Composition d'engrais selon la revendication 8, **caractérisée par** la concentration de granulés comprise entre 1 et 10% dans le DCD de l'engrais à base d'urée.

**10.** Une composition d'engrais selon les revendications 8 ou 9, **caractérisée par** la présence d'un inhibiteur d'uréase à la surface de l'engrais à base d'urée de la structure générale $R^1R^2N\text{-}PX(NH_2)_2$avec X = O ou S et $R^1$ et $R^2$ indépendamment l'un de l'autre avec de l'hydrogène, de l'alkyle ou de l'aryle substitué ou non substitué à une concentration de 0,01 à 1 %.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2714601
- DE 2922436
- DD 159988
- DE 3543920
- DE 3237905
- US 4309206 A
- EP 19881 A
- EP 0908430 A
- EP 0746537 A
- DE 10342551
- US 3668166 A
- US 3388990 A
- US 5472476 A
- WO 2006091076 A1
- DE 10342551 A1
- GB 1217106 A
- EP 1258191 A1
- WO 9627288 A1


### In der Beschreibung aufgeführte Nicht-Patentliteratur


- **E. A. BIJPOST ; J. G. KORVER.** *Proceedings of the International Fertilizer Society,* 2006, 584
- **C.A. FINCH.** Polyvinyl Alcohol. John Wiley and Sons, 1992